# EUROPÄISCHE PATENTSCHRIFT

(11) **EP 1 242 335 B1**
(45) Veröffentlichungstag und Bekanntmachung des Hinweises auf die Patenterteilung: **12.04.2006**
(21) Anmeldenummer: 00988685.4
(22) Anmeldetag: 07.12.2000
(51) Int. Cl.: C04B 41/50

(54) **KERAMIKHALTIGES DISPERGAT, VERFAHREN ZU DESSEN HERSTELLUNG UND VERWENDUNG DES DISPERGATES IN DICKSCHICHTPASTEN**
CERAMICS-CONTAINING DISPERSANT, A METHOD FOR PRODUCING SAME AND THE USE OF SAID DISPERSANT IN THICK-FILM PASTES
DISPERSANT A TENEUR EN CERAMIQUE, SON PROCEDE FABRICATION ET SON UTILISATION DANS DES PATES A COUCHES EPAISSES

(30) Priorität: 14.12.1999 DE 19960091
(43) Veröffentlichungstag der Anmeldung: 25.09.2002
(73) Patentinhaber: ROBERT BOSCH GMBH, 70442 Stuttgart (DE)
(72) Erfinder: SCHEYING, Gerd, 70186 Stuttgart (DE); WUEHRL, Ingrid, 70839 Gerlingen (DE); KUSCHEL, Petra, 71272 Renningen (DE)
(86) Internationale Anmeldenummer: PCT/DE2000/004354
(87) Internationale Veröffentlichungsnummer: WO 2001/044142

(56) Entgegenhaltungen:
- EP-A- 0 533 235
- EP-A- 0 554 908
- US-A- 5 590 387
- SCHMIDT, H. ET AL: "Sol-gel derived nanoparticles and processing routes to ceramics and composites" CERAM. TRANS. (1998), 95, 49-64 , XP002163910
- ZWINKELS M F M ET AL: "Preparation of anchored ceramic coatings on metal substrates: a modified sol-gel technique using colloidal silica sol" JOURNAL OF MATERIALS SCIENCE, 1 DEC. 1996, CHAPMAN & HALL, UK, Bd. 31, Nr. 23, Seiten 6345-6349, XP002163818 ISSN: 0022-2461
- PLUCKNETT K P ET AL: "Tape casting of fine alumina/zirconia powders for composite fabrication" JOURNAL OF THE AMERICAN CERAMIC SOCIETY, AUG. 1994, USA, Bd. 77, Nr. 8, Seiten 2137-2144, XP002163819 ISSN: 0002-7820
- DATABASE INSPEC [Online] THE INSTITUTION OF ELECTRICAL ENGINEERS, STEVENAGE, GB; Inspec No. 5625893, 1997 CHEN ET AL.: "Synthesis and properties of an aluminum nitride/polyimide nanocomposite prepared by a nonaqueous suspension process" XP002163820

## Beschreibung

Die Erfindung betrifft ein Verfahren zur Herstellung eines keramikhaltigen Dispergates und dessen Verwendung bei der Herstellung von Dickschichtpasten.

### Stand der Technik

Bei der Herstellung von Abgassensoren ist es bekannt, keramische Substrate bei Temperaturen oberhalb von 1300°C zu sintern. Dazu werden derzeit Ausgangsstoffe in Form von keramischen Pulvern mit spezifischen Oberflächen kleiner als 15 m²/g eingesetzt.

Weiter ist bekannt, in Dickschicht-Metallpasten einen Keramikanteil als Stützgerüst einzuarbeiten, und dazu Pulver mit spezifischen Oberflächen < 10 m²/g einzusetzen.

Schließlich ist auch bereits bekannt, Metall- und Gemischtleiterelektroden mit derartigen keramischen Materialien herzustellen, wobei bisher durch die hohe erforderliche Temperatur von mehr als 1300°C bei den eingesetzten Sinterprozessen die nutzbare Oberfläche, die starke Auswirkungen auf die Zugänglichkeit der sogenannten Drei-Phasen-Grenze von Gas, Metall und Elektrolyt hat, derart verringert wird, so daß damit hergestellte Sensoren an Sensitivität einbüßen.

Beschreibungen über Dispergate mit Lösungsmittel und Dispergator sind auch in verschiedenen schriftlichen Dokumenten zu finden.

So beschreibt etwa "Schmidt et al.: Sol-gel derived nanoparticles and processing routes to dceramics and composites (Ceram. Trans. 95, 49-64, 1998)" hoch kristalline Nanopartikel aus Y-ZrO₂ und FeOₓ, die aus einer Mikroemulsion mit einer nachfolgenden lösungsthermalen Behandlung und durch Fällungsreaktionen hergestellt werden. Dabei entstehen Zwischenprodukte, die durch Carbonsäuren und Aminosilane oberflächenmodifiziert sind. Die Oberflächenmodifikation verhindert das Agglomerieren der Nanopartikel (6 - 8 nm) vollständig und stellt eine vollständige Redispergierung zur Verfügung.

Weiter beschreibt US-5590387 A Metall- und keramikgesinterte Körper und deren Beschichtungen, die ein nanokristallines Metall- oder Keramikpulver und mindestens eine organische Verbindung von niedrigem Molekulargewicht aufweisen. Diese beiden Materialien werden in Wasser und/oder einem polaren organischen Lösungsmittel als Dispersionsmedium dispergiert. Die nanokristallinen Metall- und Keramikpulver weisen eine primäre Partikelgröße von weniger als 100 nm auf, wobei das Pulver in einem hoch agglomerierten Zustand vorliegt.

Ein Verfahren zum Schutz einer Oberfläche vor Korrosion ist aus EP-533235 A bekannt. Bei diesem Verfahren wird die Materialoberfläche mit einem sauren kationischen Siliziumdioxid-Sol behandelt. Dieses kationische Sol wird bei der Herstellung einer Oberflächenmodifikation unterworfen. Dadurch wird die Größe der Siliziumdioxidpartikel nicht wesentlich verändert und die mittlere Partikelgröße (10 - 70 nm) und die Partikelgrößenverteilung kann bei der Herstellung des Startmaterials (anionisches Siliziumdioxid-Sol) gesteuert werden. Ein ähnliches Verfahren wird auch in "Zwinkel et al.: Preparation of anchored ceramic coatings on metal substrates: a modified sol-gel technique using colloidal silica sol (J. Mat. Sci. 23, 6345-6349, 1996)" beschrieben, in dem der mittlere Partikeldurchmesser bei 40 nm mit einer Oberfläche von ungefähr 80 m²/g liegt.

### Vorteile der Erfindung

Das erfindungsgemäße Verfahren zur Herstellung eines Dispergates und dessen erfindungsgemäße Verwendung in Dickschichtpasten hat gegenüber dem Stand der Technik den Vorteil, daß der durch einen Knetschritt erzeugte dispergierte Zustand einer keramischen Ausgangskomponente stabil gehalten wird und keine Reagglomeration stattfinden kann, so dass das nach einem Aufbereitungsschritt erhaltene keramikhaltige Dispergat sich sehr leicht wieder redispergieren und als sogenannter "Masterbatch" für eine weitere Verarbeitung verwenden lässt.

Daneben ist vorteilhaft, daß sich durch Einsatz der mit dem Dispergat hergestellten Dickschichtpaste die Sensitivität von Elektroden in Sensoren erhöht.

Indem die nanoskalige keramische Komponente in redispergierbarer Form in dem keramischen Dispergat vorliegt kann dieses zudem ohne eine zusätzliche, aufwendige, über das übliche Maß hinausgehende Dispergierung in einfacher Weise in eine Dickschichtpaste eingearbeitet werden.

Die hergestellte Dickschichtpaste hat den Vorteil, daß durch das darin enthaltene nanoskalige keramische Stützgerüst auch schon bei Sintertemperaturen um 1000°C eine Sinterverbindung zwischen einem Substrat und dem Keramikanteil der auf das Substrat aufgetragenen Dickschichtpaste bzw. dem keramischen Stützgerüst erreicht wird. Unter dem Stützgerüst wird hierbei beispielsweise die keramische Komponente in einer Cermet-Schicht verstanden, die mit der angrenzenden keramischen Schicht des Substrates fest versintert.

Damit lassen sich nunmehr mit einer solchen Dickschichtpaste vorteilhaft auch Pasten mit Metallpulvern verarbeiten, die im sogenannten Post-firing-Verfahren eingebrannt werden.

Derartige Pasten aus Metallpulvern, die beispielsweise Gold als Elektrodenmaterial für Mischpotentialsensoren enthalten, können typischerweise bei Temperaturen von maximal ca. 1000°C eingebrannt werden, weil sonst das Metallpulver schmilzt. Dadurch, daß die keramische Komponente in dem keramikhaltigen Dispergat, das in die Dickschichtpaste eingearbeitet wurde, bereits bei gegenüber dem Stand der Technik bekannten keramikhaltigen Werkstoffen deutlich niedrigerer Temperatur sintert, ist bei dem Aufbringen einer solchen Dickschichtpaste, beispielsweise auf ein keramisches Substrat, auch schon bei einer Temperatur von ca. 1000°C stets eine optimale Sinterverbindung und Offenporigkeit gewährleistet. Daher eignet sich eine mit diesem Dispergat hergestellte Dickschichtpaste insbesondere auch für Sensorelektroden mit erhöhter Sensitivität.

Im übrigen ist vorteilhaft, daß eine derartige Dickschichtpaste auch als Funktionsschicht, beispielsweise in gassensitiven Elektroden, eingesetzt werden kann. Dazu wird das erfindungsgemäße Dispergat mit einem Dissolver aufbereitet, wobei dem keramikhaltigen Werkstoff ein Binder und ein Weichmacher zugegeben werden. Auf diese Weise kann weiter gleichzeitig in einfacher Weise die Viskosität der erhaltenen Dickschichtpaste eingestellt werden.

Vorteilhafte Weiterbildungen der Erfindung ergeben sich aus den in den Unteransprüchen genannten Maßnahmen.

So eignet sich die unter Verwendung dieses Dispergates hergestellte Dickschichtpaste insbesondere zur Verarbeitung im Siebdruckverfahren, bei der Herstellung von im Post-firing-Verfahren gebrannten keramischen und metallhaltigen Funktionsschichten, zur Herstellung keramischer Substrate bzw. Sensoren mit niedriger Sintertemperatur, zur Herstellung metallhaltiger Dickschichtpasten, sowie von Festelektrolytschichten oder Elektroden in Gassensoren wie Sauerstoffsensoren (λ-Sonde), Mischpotentialsensoren oder allgemein Sensoren mit gasselektiven Schichten.

### Beschreibung der Ausführungsbeispiele

Zur Herstellung des keramikhaltigen Dispergates wird zunächst eine keramische pulverförmige Ausgangskomponente mit einem Lösungsmittel und einem Dispergator vermischt. Die pulverförmige keramische Ausgangskomponente weist dabei eine spezifische Oberfläche von 15 m²/g bei 120 m²/g, vorzugsweise von 40 m²/g bis 100 m²/g, auf. Als keramische Komponente eignet sich besonders ein Metalloxid, ein Metallnitrid, ein Metallcarbid oder eine Mischung dieser Materialien. Insbesondere eignen sich Zirkoniumdioxid, Yttrium-stabilisiertes Zirkoniumdioxid, Titandioxid, Yttriumoxid, Titancarbid, Siliziumcarbid, Titannitrid, Siliziumnitrid, Siliziumdioxid oder Aluminiumoxid.

Als Lösungsmittel wird bevorzugt ein hochsiedendes Lösungsmittel wie beispielsweise α-Terpineol oder Diethylenglycolmonobutylether eingesetzt. Unter hochsiedend wird in diesem Zusammenhang ein Lösungsmittel verstanden, das bis mindestens 80°C, vorzugsweise bis mindestens 100°C temperaturstabil ist bzw. bei Normaldruck (1 bar) nicht verdampft.

Durch das hochsiedende Lösungsmittel soll vermieden werden, daß sich bei dem im weiteren erläuterten Aufbereitungsschritt, der zwangsläufig mit einer Temperaturerhöhung verbunden ist, das Lösungsmittel verflüchtigt. Das Lösungsmittel dient zudem gleichzeitig als Suspensionskomponente bzw. Suspensionsmittel für die keramische Komponente.

Es kann im übrigen anstelle eines hochsiedenden Lösungsmittels auch ein anderes Lösungsmittel wie beispielsweise Azeton eingesetzt werden. In diesem Fall muß jedoch gewährleistet sein, daß das während des Aufbereitungsschrittes verdampfende Lösungsmittel beispielsweise kontinuierlich nachgefüllt bzw. von Zeit zu Zeit ersetzt wird.

Als Dispergator wird eine organische Säure, insbesondere eine wassermischbare, langkettige organische Säure wie Trioxadecansäure eingesetzt. Alternativ kann jedoch teilweise als organische Säure auch Decansäure, Laurinsäure oder prinzipiell jede andere organische Säure mit einer Carboxylgruppe und einer Kohlenstoffkette mit 3 bis 20 Kohlenstoffatomen verwendet werden.

Der Dispergator wird weiter in einer Menge von 2,5 µmol/m² bis 15 µmol/m² bezogen auf die Oberfläche der eingesetzten keramischen, pulverförmigen Komponente zugegeben.

Der Anteil des Lösungsmittels in dem keramikhaltigen Dispergat ist schließlich bevorzugt so gewählt, daß die keramische Komponente in dem Dispergat einen Anteil von mehr als 40 vol.%, insbesondere 50 Vol.% bis 60 Vol.%, einnimmt.

Zur Herstellung des keramikhaltigen Dispergates wird zunächst die pulverförmige keramische Ausgangskomponente mit dem Dispergator und dem Lösungsmittel gemeinsam in einem Kneter vermischt. Die keramische Ausgangskomponente weist dabei zunächst eine mittlere Aggregat- bzw. Agglomeratgröße von 70 nm bis über 1000 nm auf. Danach wird mit dieser Mischung ein Aufbereitungsschritt durchgeführt, durch den die mittlere Teilchengröße bzw. Agglomeratgröße des keramischen Ausgangspulvers zumindest weitgehend auf dessen Primärteilchengröße von 5 nm bis 50 nm reduziert wird.

Im einzelnen erfolgt der Aufbereitungsschritt durch Kneten der pulverförmigen keramischen Ausgangskomponente, des Dispergators und des Lösungsmittels in einem Zwangsinnenmischer über eine Zeitdauer von beispielsweise 20 min bis 3 h. Bei diesem Kneten in dem Zwangsinnenmischer ist es wichtig, daß möglichst hohe Scherkräfte in den gekneteten Ausgangswerkstoff eingetragen werden. Dies ist durch den hohen Anteil der keramischen Komponente in dem Dispergat von mehr als 40 % gewährleistet.

Ziel des Aufbereitungsschritts ist es, die pulverförmigen keramischen Teilchen der keramischen Ausgangskomponente derart stark zu scheren, daß Agglomerate aufbrechen und sich damit die mittlere Teilchengröße deutlich reduziert. Durch den eingesetzten Dispergator sind die keramischen Pulverteilchen nach dem Aufbrechen der Agglomerate weiter vor Reagglomeration geschützt, so daß das nach dem Aufbereitungsschritt erhaltene keramikhaltige Dispergat sich sehr leicht wieder redispergieren und als sogenannter "MasterBatch" für eine weitere Verarbeitung verwenden läßt. Insbesondere liegen die keramischen Pulverteilchen in dem Dispergat nach dem Aufbereitungsschritt nunmehr zumindest weitgehend als Primärteilchen vor.

Um mit dem erläuterten keramikhaltigen Dispergat eine Dickschichtpaste herzustellen, wird dem Dispergat dann im weiteren in an sich bekannter Weise ein Binder und ein Weichmacher zugesetzt.

Dazu wird das keramikhaltige Dispergat mit dem Binder und dem Weichmacher in einem üblichen Pastenherstellungsverfahren verarbeitet, das heißt beispielsweise durch einen walzenstuhl oder einen Dissolver dispergiert.

Durch die Zugabe des Binders und des Weichmachers läßt sich dabei die Viskosität der erhaltenen Dickschichtpaste in einfacher Weise einstellen. Daher kann eine derartige Dickschichtpaste durch Einstellung einer entsprechend niedrigeren Viskosität auch in Siebdruckverfahren eingesetzt werden.

Im übrigen kann der vorstehend erläuterten Dickschichtpaste bei Bedarf auch eine zusätzliche metallische Pastenkomponente, beispielsweise in Form eines Metallpulvers, zugesetzt werden. Als Metallpulver eignen sich besonders Gold-, Platin- oder Palladiumpulver.

Der in der Dickschichtpaste eingesetzte Binder ist im übrigen bevorzugt ein oligomerer oder polymerer Binder wie Ethylcellulose oder Polyvinylbutyral. Als Weichmacher eignen sich Phtalate, ein Sebacate, Glycolether oder α-Terpineol.

## Patentansprüche

1. Verfahren zur Erzeugung eines keramikhaltigen Dispergates mit mindestens einer pulverförmigen keramischen Ausgangskomponente, einem Dispergator und einem Lösungsmittel, wobei die keramische Ausgangskomponente mit dem Dispergator und dem Lösungsmittel einem Aufbereitungsschritt unterzogen wird, durch den die mittlere Aggregatgröße der keramischen Ausgangskomponente reduziert wird, **dadurch gekennzeichnet, daß** der Aufbereitungsschritt ein Kneten der pulverförmigen keramischen Ausgangskomponente, des Dispergators und des Lösungsmittels umfaßt, wobei die keramische Ausgangskomponente zunächst mit einer mittleren Aggregatgröße von 70 nm bis 2000 nm eingesetzt wird, die während des Aufbereitungsschrittes auf eine mittlere Primärteilchengröße von 5 nm bis 50 nm reduziert wird, und wobei die Primärteilchen durch den eingesetzten Dispergator vor einer Reaggregation geschützt werden.

2. Verfahren nach Anspruch 1, **dadurch gekennzeichnet, daß** das Kneten in einem Zwangsinnenmischer über eine Zeitdauer von 20 min bis 3 h erfolgt.

3. Verfahren nach Anspruch 1 oder 2, **dadurch gekennzeichnet, daß** die keramische Komponente ein Metalloxid, Metallnitrid oder Metallcarbid enthält, insbesondere Zirkoniumdioxid, Yttrium-stabilisiertes Zirkoniumdioxid, Titandioxid, Siliziumdioxid oder Aluminiumoxid oder ein Gemisch dieser Stoffe.

4. Verfahren nach einem der vorangehenden Ansprüche, **dadurch gekennzeichnet, daß** das Lösungsmittel ein hochsiedendes Lösungsmittel, insbesondere a-Terpineol oder Diethylenglycolmonobutylether, ist.

5. Verfahren nach einem der vorangehenden Ansprüche, **dadurch gekennzeichnet, daß** der Dispergator eine organische Säure, insbesondere eine wassermischbare, langkettige Säure, wie Trioxadecansäure oder Decansäure oder Laurinsäure, ist.

6. Verfahren nach einem der vorangehenden Ansprüche, **dadurch gekennzeichnet, daß** der Dispergator in einer Menge von 2,5 µmol/m² bis 15 µmol/m² bezogen auf die Oberfläche.der keramischen Komponente eingesetzt ist.

7. Verfahren nach einem der vorangehenden Ansprüche, **dadurch gekennzeichnet, daß** die keramische Komponente mit einem Anteil von mehr als 40 Vol.%, insbesondere 50 Vol.% bis 60 Vol.%, eingesetzt ist.

8. Verwendung eines durch nach einem der Ansprüche 1 bis 7 hergestellten keramikhaltigen Dispergats zur Herstellung einer Dickschichtpaste, insbesondere für den Einsatz im Siebdruck oder bei der Herstellung von im Post-firing-Verfahren gebrannten Keramiken.

## Claims

1. Process for producing a ceramic-containing dispersate comprising at least one pulverulent ceramic starting component, a dispersant and a solvent, the ceramic starting component, together with the dispersant and the solvent, being subjected to a preparation step, by which the mean aggregate size of the ceramic starting component is reduced, **characterized in that** the treatment step comprises kneading the pulverulent ceramic starting component, the dispersant and the solvent, the ceramic starting component initially being used with a mean aggregate size of from 70 nm to 2000 nm, which during the treatment step is reduced to a mean primary particle size of from 5 nm to 50 nm, and the primary particles being protected from re-aggregation by the dispersant used.

2. Process according to Claim 1, **characterized in that** the kneading takes place in a positive internal mixer for a period of from 20 min to 3 h.

3. Process according to Claim 1 or 2, **characterized in that** the ceramic component contains a metal oxide, metal nitride or metal carbide, in particular zirconium dioxide, yttrium-stabilized zirconium dioxide, titanium dioxide, silicon dioxide or aluminium oxide or a mixture of these substances.

4. Process according to one of the preceding claims, **characterized in that** the solvent is a high-boiling solvent, in particular a-terpineol or diethylene glycol monobutyl ether.

5. Process according to one of the preceding claims, **characterized in that** the dispersant is an organic acid, in particular a water-miscible, long-chain acid, such as trioxadecanoic acid or decanoic acid or lauric acid.

6. Process according to one of the preceding claims, **characterized in that** the dispersant is used in a quantity of from 2.5 µmol/m² to 15 µmol/m², based on the surface area of the ceramic component.

7. Process according to one of the preceding claims, **characterized in that** the ceramic component is used in an amount of more than 40% by volume, in particular 50% by volume to 60% by volume.

8. Use of a ceramic-containing dispersate produced as described in one of Claims 1 to 7 for the production of a thick-film paste, in particular for use in screenprinting or in the production of ceramics fired by the post-firing process.

## Revendications

1. Procédé de fabrication d'un produit dispersé à base de céramique, avec au moins une composante de départ céramique poudreuse, un dispersant et un solvant, selon lequel la composante de départ céramique est soumise conjointement avec le dispersant et le solvant à une étape de préparation dans laquelle on réduit la taille d'agrégat moyenne de la composante de départ céramique,
**caractérisé en ce que**
l'étape de préparation comprend un malaxage de la composante de départ céramique poudreuse, du dispersant et du solvant, en introduisant d'abord la composante de départ céramique avec une taille d'agrégat moyenne de 70 nm à 2000 nm qui, pendant l'étape de préparation, est réduite à une taille de particules primaires moyenne de 5 nm à 50 nm, et les particules primaires étant protégées par le dispersant contre une réagrégation.

2. Procédé selon la revendication 1,
**caractérisé en ce que**
le malaxage s'effectue dans un malaxeur à mélange forcé pendant une durée de 20 minutes à 3 heures.

3. Procédé selon la revendication 1 ou 2,
**caractérisé en ce que**
la composante céramique contient un oxyde de métal, un nitrure de métal ou un carbure de métal, en particulier du dioxyde de zirconium, du dioxyde de zirconium stabilisé à l'yttrium, du dioxyde de titane, du dioxyde de silicium ou de l'oxyde d'aluminium ou un mélange de ces substances.

4. Procédé selon l'une quelconque des revendications précédentes,
**caractérisé en ce que**
le solvant est un solvant lourd, en particulier du α-terpinéol ou du monobutyléther de diéthylèneglycol.

5. Procédé selon l'une quelconque des revendications précédentes,
**caractérisé en ce que**
le dispersant est un acide organique, en particulier un acide à chaîne longue miscible à l'eau tel que l'acide trioxadécanoïqué ou l'acide décanoïque ou l'acide laurique.

6. Procédé selon l'une quelconque des revendications précédentes,
**caractérisé en ce que**
le dispersant est introduit en quantité de 2,5 µmol/m² à 15 µmol/m² par rapport à la surface de la composante céramique.

7. Procédé selon l'une quelconque des revendications précédentes,
**caractérisé en ce que**
la composante céramique est introduite dans une proportion supérieure à 40 % en volume, en particulier entre 50 et 60 % en volume.

8. Utilisation d'un produit dispersé à base de céramique fabriqué selon l'une quelconque des revendications 1 à 7, pour la production d'une pâte à couche épaisse, en particulier pour l'utilisation dans la sérigraphie ou lors de la fabrication de céramiques cuites selon le procédé de « post-brûlage».
